# EUROPÄISCHE PATENTSCHRIFT

(11) **EP 3 997 368 B1**
(45) Veröffentlichungstag und Bekanntmachung des Hinweises auf die Patenterteilung: **27.05.2026**
(21) Anmeldenummer: 20737137.8
(22) Anmeldetag: 03.07.2020
(51) Int. Cl.: F16K 1/20, F16K 27/02, B65D 90/58, B67D 3/04

(54) **VENTILWELLENVERRIEGELUNG**
VALVE SHAFT LOCKING MECHANISM
VERROUILLAGE D'AXE DE VANNE

(30) Priorität: 09.07.2019 DE 102019118534
(43) Veröffentlichungstag der Anmeldung: 18.05.2022
(73) Patentinhaber: Protechna S.A., 1701 Fribourg (CH)
(72) Erfinder: SCHNEIDER, Sebastian, 56412 Oberelbert (DE); OBERMANN, Ernst, 57632 Eichen (DE)
(74) Vertreter: advotec.
(86) Internationale Anmeldenummer: PCT/EP2020/068852
(87) Internationale Veröffentlichungsnummer: WO 2021/004951

(56) Entgegenhaltungen:
- EP-A1- 0 331 805
- CN-B- 107 061 782
- DE-A1- 102006 020 447
- DE-A1- 102016 200 206
- JP-A- H07 269 740
- US-A- 3 727 879
- US-B1- 6 321 948

## Beschreibung

Die vorliegende Erfindung betrifft eine Entnahmearmatur für Flüssigkeitsbehälter nach dem Oberbegriff des Anspruchs 1.

Aus der DE 10 2018 102 062 A1 ist eine Entnahmearmatur der eingangs genannten Art bekannt, bei die axiale Sicherung der Ventilwelle im Armaturengehäuse zwischen dem Gehäusedom und dem im Gehäusedom aufgenommenen Ventilwellenabschnitt über eine kraftschlüssige Verbindung zwischen dem Ventilwellenabschnitt und dem Gehäusedom durch Ausbildung einer geeigneten Passung zwischen dem Durchmesser des Ventilwellenabschnitts und dem Innendurchmesser des Gehäusedoms erfolgt.

Zur Montage der Ventilwelle im Gehäusedom des Armaturengehäuses ist es daher erforderlich, dass der Ventilwellenabschnitt der Ventilwelle in die Bohrung des Gehäusedoms eingepresst wird, um sicherzustellen, dass eine axiale Fixierung der Ventilwelle im Armaturengehäuse durch einen hinreichenden Reibschluss zwischen dem Ventilwellenabschnitt und dem Gehäusedom ermöglicht wird. Um bei einer Betätigung der Entnahmearmatur eine unbeabsichtigte Entfernung der Ventilwelle aus dem Armaturengehäuse auszuschließen, ist die zur Montage erforderliche Einpresskraft, die zur Entfernung der Ventilwelle eine entsprechende Auszugskraft voraussetzt, hinreichend groß zu wählen. Die Einpresskraft ist somit größer, als für eine Montage der Ventilwelle tatsächlich erforderlich.

Die JP H07 269740 A zeigt eine Entnahmearmatur, gemäß dem Oberbegriff des Anspruchs 1, an der zur Ausbildung eines formschlüssigen Eingriffs eine Eingriffseinrichtung ausgebildet ist mit einem in der Durchgangsöffnung des Gehäusedoms angeordneten Domvorsprung, der in eine in der Ventilwelle ausgebildete Ventilwellennut einrastet.

Der Erfindung liegt die Aufgabe zugrunde, eine Entnahmearmatur mit einer Ventilwelle vorzuschlagen, deren Montage nur eine geringe Montagekraft erforderlich macht, ohne Beeinträchtigung einer sicheren axialen Fixierung der Ventilwelle im Armaturengehäuse.

Zur Lösung dieser Aufgabe weist die erfindungsgemäße Entnahmearmatur die Merkmale des Anspruchs 1 auf.

Erfindungsgemäß ist zur axialen Sicherung der Ventilwelle im Armaturengehäuse zwischen dem Gehäusedom und einem im Gehäusedom aufgenommenen Ventilwellenabschnitt ein formschlüssiger Eingriff ausgebildet.

Die axiale Sicherung der Ventilwelle über einen Formschluss der Ventilwelle mit dem Gehäusedom ermöglicht es, dass die zur Montage der Ventilwelle erforderliche Montagekraft lediglich hinreichend groß zu wählen ist, um den Formschluss herzustellen, wobei die axiale Sicherung unabhängig von der Montagekraft über den ausgebildeten Formschluss hergestellt ist.

Erfindungsgemäß ist zur Ausbildung des formschlüssigen Eingriffs eine Eingriffseinrichtung ausgebildet mit einem in einer Durchgangsöffnung des Gehäusedoms, die zur Durchführung des Ventilwellenabschnitts dient, ausgebildeten radialen Domvorsprung, der anstatt einer Ventilwellennut mit einem radialen Ventilwellenvorsprung des Ventilwellenabschnitts eine axiale Rasteinrichtung ausbildet. Aufgrund dieser bevorzugten Ausführungsform ist eine Herstellung des regelmäßig in einem Spritzgießverfahren hergestellten Armaturengehäuses ohne eine Änderung des beim Spritzgießverfahren eingesetzten Formwerkzeugs möglich. Vielmehr kann die Herstellung des Armaturengehäuses mit dem am Armaturengehäuse ausgebildeten Gehäusedom, dessen Herstellung die Verwendung eines die Aufnahmebohrung zur Aufnahme der Ventilwelle definierenden Formkerns erforderlich macht, durch eine lediglich leichte Modifikation des bislang verwendeten Formkerns erfolgen, ohne dass das Formwerkzeug selbst geändert werden muss oder gar ein neues Formwerkzeug notwendig wird.

Wenn der Domvorsprung am axial unteren Ende der Durchgangsöffnung im Gehäusedom ausgebildet ist, erfolgt die axiale Fixierung im Übergang zwischen dem Auslaufrohr und dem Gehäusedom und somit an einer besonders steif ausgebildeten Stelle des Armaturengehäuses.

Vorzugsweise ist der Domvorsprung rampenförmig ausgebildet mit einer relativ kurzen und steil in Montagerichtung der Ventilwelle ansteigenden Rastrampe und einer relativ langen, flachen und in Montagerichtung der Ventilwelle abfallenden Riegelrampe, sodass einerseits die Rastrampe und die Riegelrampe in einem Spritzgießverfahren zur Herstellung des Armaturengehäuses mit zwangsentformtem Ziehkern leicht herstellbar sind. Andererseits wird durch die Rastrampe ein bei der Montage der Ventilwelle relativ leicht zu überwindendes Hindernis und durch die Riegelrampe eine ansteigende Rampe in Demontagerichtung gebildet, die die Demontage der Ventilwelle nur mit relativ hoher Auszugskraft ermöglicht.

Besonders vorteilhaft ist es, wenn in Kombination mit der vorstehend erläuterten vorteilhaften Ausgestaltung des Domvorsprungs der Ventilwellenvorsprung ebenfalls rampenförmig ausgebildet ist mit einer in Montagerichtung abfallenden Rastrampe und einem am Ende der Rampe ausgebildeten Rastabsatz, da somit aufgrund der gegensinnig ausgebildeten Rastrampen des Domvorsprungs und des Ventilwellenvorsprungs beim Montagevorgang ein Gleiten der Rastrampen aufeinander ermöglicht wird und somit den Montagevorgang bereits mit einer relativ geringen Montagekraft ermöglicht.

In Demontagerichtung jedoch bildet der Rastabsatz des Ventilwellenvorsprungs in Kombination mit der in Demontagerichtung ansteigenden Riegelrampe ein axiales Bewegungshindernis aus, sodass die Aufbringung einer im Vergleich zur Montagekraft wesentlich erhöhten Demontagekraft notwendig ist, um den Rastabsatz des Ventilwellenvorsprungs über den Domvorsprung hinweg zu bewegen.

Vorzugsweise ist der Ventilwellenabschnitt als Dichtungsabschnitt zur Aufnahme von Radialdichtungselementen einer Dichtungseinrichtung zur Abdichtung der Ventilwelle gegenüber dem Gehäusedom ausgebildet, sodass der Gehäusedom abgesehen von dem Bereich, in dem der Domvorsprung ausgebildet ist, einen über die Höhe des Domvorsprungs konstanten Innendurchmesser aufweist, was die Herstellung des Armaturengehäuses im Spritzgießverfahren noch weiter vereinfacht.

Wenn der Außendurchmesser des Ventilwellenvorsprungs dem Außendurchmesser des Ventilwellenabschnitts entspricht, kann der Ventilwellenvorsprung gleichzeitig die Funktion eines der Dichtungseinrichtung vorgeordneten Schwallkragens erfüllen, sodass die auf die Dichtungen im Dichtungsabschnitts einwirkenden Volumenkräfte der aus dem Armaturengehäuse ausströmenden Flüssigkeit in ihrer Wirkung auf die Dichtungseinrichtung abgemindert werden.

Besonders vorteilhaft ist es, wenn der Ventilwellenabschnitt benachbart dem Domvorsprung einen Stützbund zur abstützenden Auflage auf der Rastrampe des Domvorsprungs aufweist, sodass die Rastrampe des Domvorsprungs gleichzeitig als axiales Auflager für die Ventilwelle dient.

Wenn darüber hinaus der Stützbund und der Rastvorsprung korrespondierende Querschnittskonturen aufweisen, bildet der Domvorsprung zusammen mit dem Stützbund ein axiales Gleitlager für eine komfortable Betätigung der Entnahmearmatur aus.

Nachfolgend wird eine bevorzugte Ausführungsform der Entnahmearmatur anhand der Zeichnungen näher erläutert.

Es zeigen:
- **Fig. 1**: Eine isometrische Darstellung einer an einem Transport- und Lagerbehälter für Flüssigkeiten angeschlossenen Entnahmearmatur mit einer in einem Gehäusedom eines Armaturengehäuses geführten Ventilwelle;
- **Fig. 2**: einen im Gehäusedom des Armaturengehäuses gelagerten Ventilwellenabschnitt;
- **Fig.3**: eine weitere Ausführungsform des Ventilwellenabschnitts;
- **Fig.4**: eine Längsschnittdarstellung einer Entnahmearmatur mit dem im Gehäusedom des Armaturengehäuses gelagerten Ventilwellenabschnitt.

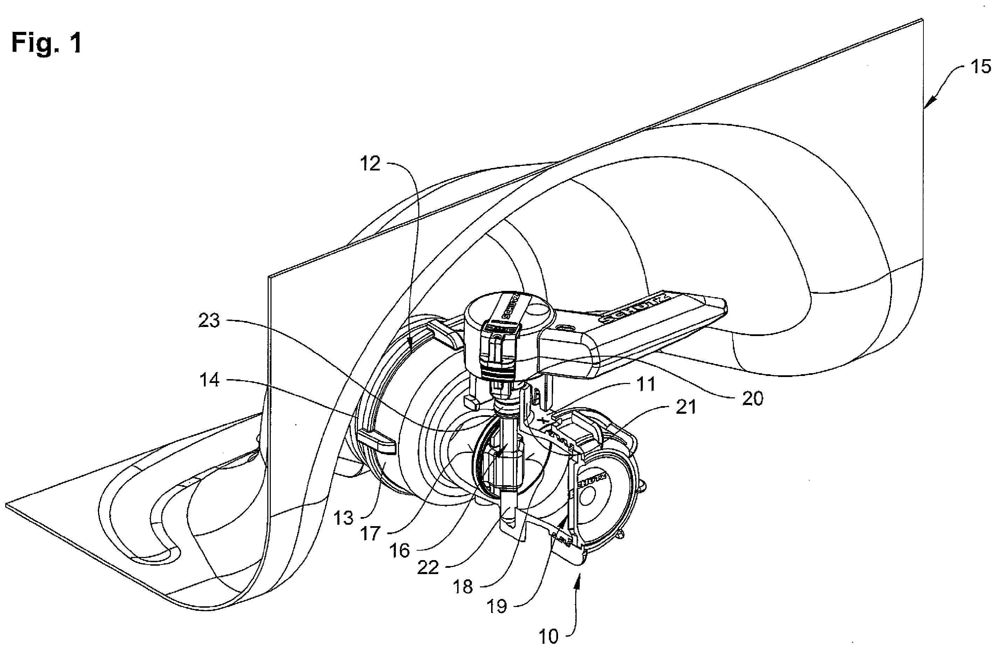

**Fig. 1** zeigt eine Entnahmearmatur 10, die ein Armaturengehäuse 11 aufweist, das an einem Einlaufende 12 mittels einer Überwurfmutter 13 mit einem Auslaufstutzen 14 verbunden ist, der an einem Flüssigkeitsbehälter 15 angeordnet ist, von dem in **Fig. 1** lediglich der Armaturenanschlussbereich dargestellt ist. Flüssigkeitsbehälter 15 der Art, wie in **Fig. 1** dargestellt, werden beispielsweise in einem Blasformverfahren hergestellt und bilden einen Bestandteil eines Intermediate Bulk Containers (IBC), wobei sie in einem auf einer Palette angeordneten Gitterkäfig angeordnet sind.

**Fig. 1** zeigt die Entnahmearmatur 10 in ihrer Absperrstellung, in der ein an einer Ventilwelle 16 angeordneter Ventilkörper 17 einen Durchflussquerschnitt eines durch das Armaturengehäuse 11 ausgebildeten Ausflussrohres 19 versperrt. Der Ventilkörper 17 ist in dem hier dargestellten Ausführungsbeispiel über eine Welle-Nabe-Verbindung 18 mit einem Anschlussende 22 der Ventilwelle 16 verbunden. Die Ventilwelle 16 ist mit einem Betätigungsende 20 durch einen am Armaturengehäuse 11 ausgebildeten Gehäusedom 21 aus dem Armaturengehäuse 11 herausgeführt und mit einem Ventilwellenabschnitt 23 im Gehäusedom 21 aufgenommen.

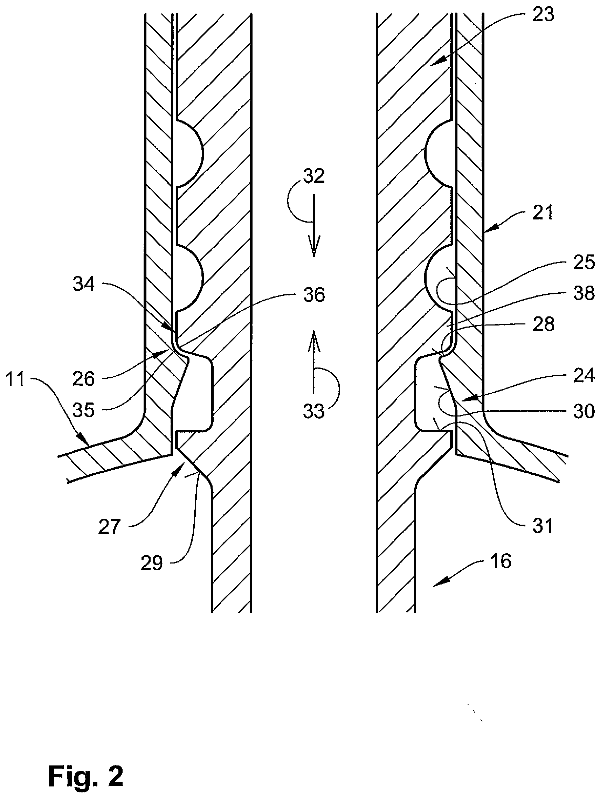

Wie insbesondere **Fig. 2** zu entnehmen ist, ist zwischen dem Gehäusedom 21 und dem im Übergang zwischen dem Anschlussende 22 und dem Betätigungsende 20 ausgebildeten Ventilwellenabschnitt 23 eine Eingriffseinrichtung 24 ausgebildet, mit einem in einer Durchgangsöffnung 25 des Gehäusedoms 21 ausgebildeten radialen Domvorsprung 26, der im Fall des vorliegenden Ausführungsbeispiels als Ringsteg ausgebildet ist. Am Verbindungswellenabschnitt 23 ist ein radialer Ventilwellenvorsprung 27 ausgebildet. Wie anhand von **Fig. 2** nachvollziehbar, bildet der Ventilwellenvorsprung 27 bei einer Montage der Ventilwelle 16 im Armaturengehäuse 11, bei der die Ventilwelle 16 in Montagerichtung 32 von oben in den Gehäusedom 21 eingeführt wird, zusammen mit dem Domvorsprung 26 eine axial wirkende Rasteinrichtung aus.

Sowohl der Domvorsprung 26 als auch der Ventilwellenvorsprung 27 sind rampenförmig ausgebildet, wobei der Domvorsprung 26 in Montagerichtung 32 gesehen zunächst eine relativ kurze steil ansteigende Rastrampe 28 aufweist, über die der Ventilwellenvorsprung 27 bei der Montage hinweggeführt wird, so dass nach einem Gleiten einer am Ventilwellenvorsprung 27 ausgebildeten in Montagerichtung abfallenden Rastrampe 29 über den Domvorsprung 26 hinweg ein Verrasten des Ventilwellenvorsprungs 27 hinter dem Domvorsprung 26 erfolgt.

Abweichend von der relativ geringen Einpresskraft, die notwendig ist, um bei der Montage die in **Fig. 2** dargestellte Konfiguration zu erreichen, bei der der Ventilwellenvorsprung 27 hinter dem Domvorsprung 26 verrastet ist, wird aufgrund der in Demontagerichtung 33 ansteigenden Ausbildung einer Riegelrampe 30 des Domvorsprungs 26 und einem am Ventilwellenvorsprung 27 ausgebildeten Rastabsatz 31 eine im Vergleich zur Einpresskraft wesentlich höhere Auszugskraft erforderlich, um die Rastverbindung zwischen der Ventilwelle 16 und dem Gehäusedom 21 des Armaturengehäuses 11 zu lösen.

Hierdurch ist sichergestellt, dass eine Trennung der Ventilwelle 16 vom Armaturengehäuse 11 nur das Ergebnis eines bewusst ausgeführten Demontagevorgangs ist und nicht bei einem normalen Öffnungsvorgang des Ventils erfolgen kann. Im Gegensatz hierzu ist aufgrund des gegensinnigen Ansteigens der Rastrampe 28 des Domvorsprungs 26 und der Rastrampe 29 des Ventilwellenvorsprungs 27, derart, dass die Rastrampen 28, 29 beim Fügen der Verbindung zwischen der Ventilwelle 16 und dem Domvorsprung 26 aufeinander gleiten können, nur eine vergleichsweise geringe Einpress- oder Fügekraft notwendig.

Wie **Fig. 2** weiter zeigt, weist der Ventilwellenabschnitt 23 benachbart dem Domvorsprung 26 einen Stützbund 34 zur abstützenden Auflage auf der Rastrampe 28 des Domvorsprungs 26 auf, wobei die Rastrampe 28 und der Stützbund 34 korrespondierende Querschnittskonturen 35, 36 aufweisen.

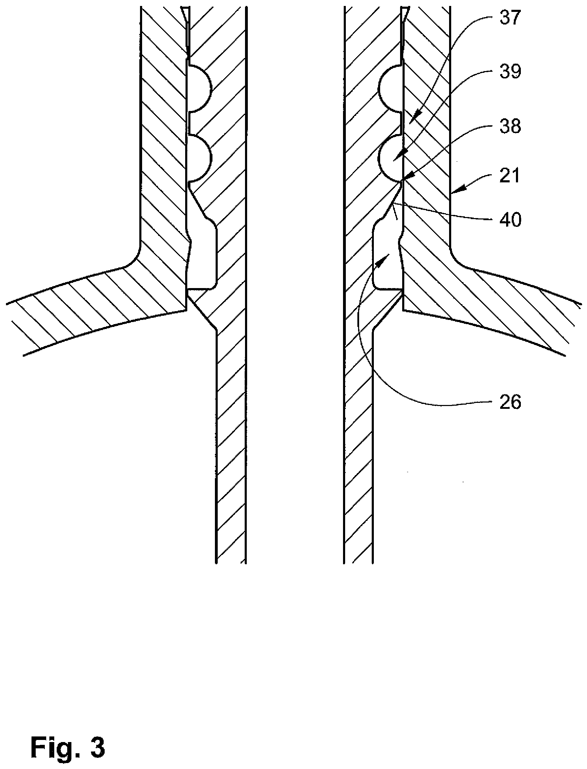

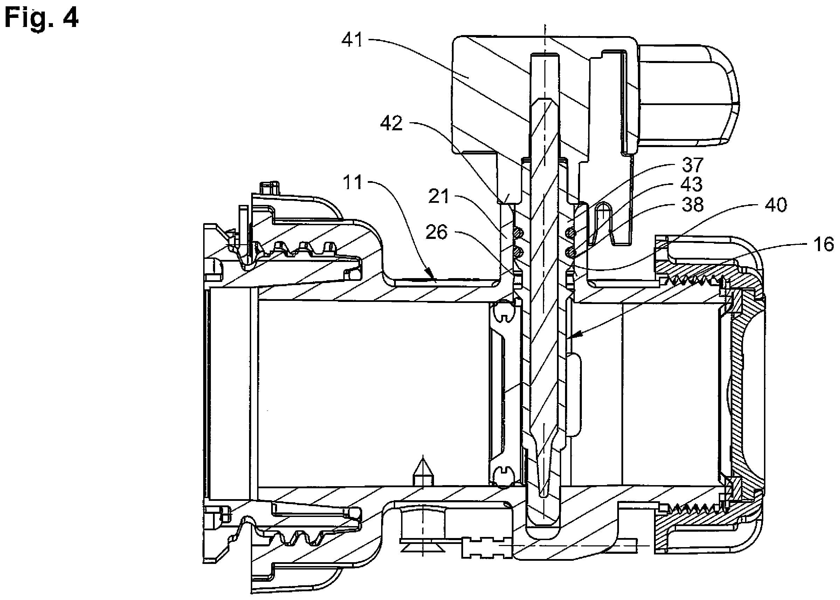

**Fig. 3** zeigt in einer weiteren Ausführungsform einen Ventilwellenabschnitt 37, der abweichend vom Ventilwellenabschnitt 23 keinen an einer Nutflanke 38 einer zur Aufnahme eines Radialdichtungselements 43 bestimmten Aufnahmenut 39 ausgebildeten Stützbund 34 mit einer an die Querschnittskontur 35 des Domvorsprungs 26 angepassten Querschnittskontur 36 aufweist, sondern stattdessen an der Nutflanke 38 eine dem Domvorsprung 26 gegenüberlegende Fase 40 aufweist. Hierdurch wird sichergestellt, dass eine axiale Abstützung der Ventilwelle 16, wie in **Fig. 4** dargestellt, nur durch Anlage eines mit der Ventilwelle 16 verbundenen Handgriffs 40 gegen einen oberen Rand 42 des Gehäusedoms 21 erfolgt und ein Berührungskontakt zwischen der Nutflanke 38 und dem Domvorsprung 26 ausgeschlossen ist. Im Falle einer bei der Montage zu tief in den Gehäusedom 21 eingepressten Ventilwelle 16 kann somit verhindert werde, dass eine unerwünschte Beschädigung des Domvorsprungs 26, die dazu führen könnte, dass die gewünscht hohen Auszugskräfte nicht erreicht werden, durch die Nutflanke 38 erfolgt.

## Patentansprüche

1. Entnahmearmatur (10) für Flüssigkeitsbehälter, insbesondere zum Anschluss an den Auslaufstutzen oder die Auslauföffnung eines Transport- und Lagerbehälters für Flüssigkeiten, mit einem Armaturengehäuse (11), in dem ein mit einer Ventilwelle (16) verschwenkbarer Ventilkörper (17) zum Öffnen und Schließen eines Durchflussquerschnitts eines Auslaufrohres (19) angeordnet ist, wobei die Ventilwelle (16) mit einem Anschlussende (22) zur Verbindung mit dem Ventilkörper (17) im Auslaufrohr (19) des Armaturengehäuses (11) angeordnet ist, und mit einem Betätigungsende (20) durch einen am Armaturengehäuse (11) ausgebildeten Gehäusedom (21) aus dem Armaturengehäuse (11) herausgeführt ist, wobei zur axialen Sicherung der Ventilwelle (16) im Armaturengehäuse (11) zwischen dem Gehäusedom (21) und einem im Gehäusedom (21) aufgenommenen Ventilwellenabschnitt (23) ein formschlüssiger Eingriff ausgebildet ist, derart, dass zur Ausbildung des formschlüssigen Eingriffs eine Eingriffseinrichtung (24) ausgebildet ist mit einem in einer Durchgangsöffnung (25) des Gehäusedoms (21), die zur Durchführung des Ventilwellenabschnitts (23) dient, ausgebildeten radialen Domvorsprung (26),
**dadurch gekennzeichnet,**
**dass** der Domvorsprung (26) mit einem radialen Ventilwellenvorsprung (27) des Verbindungswellenabschnitts (23) eine axiale Rasteinrichtung ausbildet.

2. Entnahmearmatur nach Anspruch 1,
**dadurch gekennzeichnet,**
**dass** der Domvorsprung (26) am axial unteren Ende der Durchgangsöffnung (25) im Gehäusedom (21) ausgebildet ist.

3. Entnahmearmatur nach Anspruch 1 oder 2,
**dadurch gekennzeichnet,**
**dass** der Domvorsprung (26) rampenförmig ausgebildet ist mit einer relativ kurzen und steil in Montagerichtung (32) der Ventilwelle (16) ansteigenden Rastrampe (28) und einer relativ langen, flachen und in Montagerichtung (32) der Ventilwelle (16) abfallenden Riegelrampe (30).

4. Entnahmearmatur nach Anspruch 3,
**dadurch gekennzeichnet,**
**dass** der Ventilwellenvorsprung (27) ebenfalls rampenförmig ausgebildet ist mit einer in Montagerichtung (32) abfallenden Rastrampe (29) und einem am Ende der Rastrampe (29) ausgebildeten Rastabsatz (31).

5. Entnahmearmatur nach einem der Ansprüche 1 bis 4,
**dadurch gekennzeichnet,**
**dass** der Ventilwellenabschnitt (23) als Dichtungsabschnitt zur Aufnahme von Radialdichtungselementen (43) zur Abdichtung der Ventilwelle (16) gegenüber dem Gehäusedom (21) ausgebildet ist.

6. Entnahmearmatur nach Anspruch 5,
**dadurch gekennzeichnet,**
**dass** der Außendurchmesser des Ventilwellenvorsprungs (27) dem Außendurchmesser des Ventilwellenabschnitts (23) entspricht.

7. Entnahmearmatur nach einem der Ansprüche 1 bis 6,
**dadurch gekennzeichnet,**
**dass** der Ventilwellenabschnitt (23) benachbart dem Domvorsprung (26) einen Stützbund (34) zur abstützenden Auflage auf der Rastrampe (28) des Domvorsprungs (26) aufweist.

8. Entnahmearmatur nach Anspruch 7,
**dadurch gekennzeichnet,**
**dass** der Stützbund (34) und der Ventilwellenvorsprung (27) korrespondierende Querschnittskonturen (35, 36) aufweisen.

## Claims

1. A tapping armature (10) for liquid containers, in particular for being connected to the outlet port or the outlet opening of a transport and storage container for liquids, the tapping armature comprising an armature housing (11) in which a valve body (17) pivotable by means of a valve shaft (16) and serving to open and close a flow cross section of an outlet tube (19) is disposed, a connection end (22) of the valve shaft (16) for being connected to the valve body (17) being disposed in the outlet tube (19) of the armature housing (11) and an operating end (20) of the valve shaft (16) protruding from the armature housing (11) through a housing dome (21) formed on the armature housing (11), a form-fitting engagement being established between the housing dome (21) and a valve shaft portion (23) housed in the housing dome (21) in order to axially secure the valve shaft (16) in the armature housing (11), an engagement means (24) being realized for establishing the form-fitting engagement, the engagement means (24) having a radial dome projection (26) formed in a passage opening (25) of the housing dome (21), which serves for the passage of the valve shaft portion (23),
**characterized in that**
the dome projection (26) forms an axial locking mechanism together with a radial valve shaft projection (27) of the connecting valve shaft portion (23).

2. The tapping armature according to claim 1,
**characterized in that**
the dome projection (26) is formed at the axially lower end of the passage opening (25) in the housing dome (21).

3. The tapping armature according to claim 1 or 2,
**characterized in that**
the dome projection (26) is ramp-shaped and has a relatively short locking ramp (28) steeply rising in the installation direction (32) of the valve shaft (16) and a relatively long and flat latching ramp (30) descending in the installation direction (32) of the valve shaft (16).

4. The tapping armature according to claim 3,
**characterized in that**
the valve shaft projection (27) is also ramp-shaped and has a locking ramp (29) descending in the installation direction (32) and a locking shoulder (31) formed at the end of the locking ramp (29).

5. The tapping armature according to any one of claims 1 to 4,
**characterized in that**
the valve shaft portion (23) is realized as a sealing portion for receiving radial sealing elements (43) for sealing the valve shaft (16) against the housing dome (21).

6. The tapping armature according to claim 5,
**characterized in that**
the outer diameter of the valve shaft projection (27) corresponds to the outer diameter of the valve shaft portion (23).

7. The tapping armature according to any one of claims 1 to 6,
**characterized in that**
adjacent to the dome projection (26), the valve shaft portion (23) has a supporting collar (34) for resting on the locking ramp (28) of the dome projection (26) in a supporting manner.

8. The tapping armature according to claim 7,
**characterized in that**
the supporting collar (34) and the valve shaft projection (27) have corresponding cross-sectional contours (35, 36).

## Revendications

1. Robinet de prise (10) pour récipients de liquides, destinée notamment à être raccordée à l'orifice de sortie ou à l'ouverture de sortie d'un récipient de transport et de stockage de liquides, le robinet de prise comprenant un boîtier de robinet (11) dans lequel est disposé un corps de vanne (17) pivotable au moyen d'un arbre de vanne (16) et servant à ouvrir et fermer une section transversale d'écoulement d'un tube de sortie (19), une extrémité de raccordement (22) de l'arbre de vanne (16) qui sert à être raccordée au corps de vanne (17) étant disposée dans le tube de sortie (19) du boîtier de robinet (11) et une extrémité de commande (20) de l'arbre de vanne (16) faisant saillie hors du boîtier de robinet (11) au travers d'un dôme de boîtier (21) formé sur le boîtier de robinet (11), une prise par forme étant formée entre le dôme de boîtier (21) et une partie d'arbre de vanne (23) logée dans le dôme de boîtier (21) afin de fixer axialement l'arbre de vanne (16) dans le boîtier de robinet (11), un moyen de prise (24) étant prévu pour former la prise par forme, le moyen de prise (24) ayant une saillie de dôme (26) radiale formée dans une ouverture de passage (25) du dôme de boîtier (21), qui sert pour le passage de la partie d'arbre de vanne (23),
**caractérisé en ce que**
la saillie de dôme (26) forme un mécanisme d'encliquetage axial conjointement avec une saillie d'arbre de vanne (27) radiale de la partie d'arbre de vanne (23) raccordante.

2. Robinet de prise selon la revendication 1,
**caractérisé en ce que**
la saillie de dôme (26) est formée à l'extrémité axialement inférieure de l'ouverture de passage (25) dans le dôme de boîtier (21).

3. Robinet de prise selon la revendication 1 ou 2,
**caractérisé en ce que**
la saillie de dôme (26) est en forme de rampe et a une rampe d'encliquetage (28) relativement courte s'élevant abruptement dans la direction d'installation (32) de l'arbre de vanne (16) et une rampe de verrouillage (30) relativement longue et plate descendant dans la direction d'installation (32) de l'arbre de vanne (16).

4. Robinet de prise selon la revendication 3,
**caractérisé en ce que**
la saillie d'arbre de vanne (27) est également en forme de rampe et a une rampe d'encliquetage (29) descendant dans la direction d'installation (32) et un épaulement d'encliquetage (31) formé à l'extrémité de la rampe d'encliquetage (29).

5. Robinet de prise selon l'une quelconque des revendications 1 à 4,
**caractérisé en ce que**
la partie d'arbre de vanne (23) est réalisée comme partie d'étanchéité destinée à recevoir des éléments d'étanchéité radiaux (43) pour étancher l'arbre de vanne (16) par rapport au dôme de boîtier (21).

6. Robinet de prise selon la revendication 5,
**caractérisé en ce que**
le diamètre extérieur de la saillie d'arbre de vanne (27) correspond au diamètre extérieur de la partie d'arbre de vanne (23).

7. Robinet de prise selon l'une quelconque des revendications 1 à 6,
**caractérisé en ce**
**qu'**adjacent à la saillie de dôme (26), la partie d'arbre de vanne (23) a une collerette d'appui (34) destinée à s'appuyer sur la rampe d'encliquetage (28) de la saillie de dôme (26).

8. Robinet de prise selon la revendication 7,
**caractérisé en ce que**
la collerette d'appui (34) et la saillie d'arbre de vanne (27) ont des contours de section transversale (35, 36) correspondants.
